# EUROPEAN PATENT APPLICATION

(11) **EP 1 990 966 A2**
(43) Date of publication of application: **12.11.2008**
(21) Application number: 08154280.5
(22) Date of filing: 09.04.2008
(51) Int. Cl.: H04L 27/36, H04B 7/185

(54) **System and method of transmitting and receiving satellite digital radio signals over an ODD number of frequency slots**

(30) Priority: 10.05.2007 US 801530
(71) Applicant: Delphi Technologies, Inc., Troy, Michigan 48007 (US)
(72) Inventor: Walker, Glenn A., Greentown, IN 46936 (US); Dibiaso, Eric A., Kokomo, IN 46901 (US)
(74) Representative: Denton, Michael John

(57) **Abstract**

A system (10) and method (200,300) for transmitting and receiving data which includes at least one satellite (14), at least one transmitter (12) in communication with the at least one satellite (14), and at least one receiver (16) in communication with the at least one satellite (14). The transmitter (12) modulates source data (18) into a first modulated signal using a first modulation and a second modulated signal using a second modulation, and transmits the first and second modulated signals over an odd number of frequency slots to the satellite (14). The receiver (16) receives the first and second modulated signals and demodulates at least one of the first and second modulated signals.

## Description

### Technical Field

The present invention generally relates to a system and method of transmitting and receiving signals, and more particularly, relates to a system and method for transmitting and receiving satellite digital radio signals.

### Background of the Invention

Vehicles can be equipped with satellite radio receivers as an alternative, or in combination with, traditional terrestrial radio receivers. Additionally, satellite radio receivers can be used in places other than vehicles, such as handheld devices or devices used in one's home. The satellite radio systems are generally designed such that the receiver receives a signal from a satellite and a terrestrial radio frequency (RF), which is typically referred to as a terrestrial repeater.

The frequency spectrum is divided into specific frequency slots where certain devices typically operate within a certain frequency band. Due to current European regulations, the European satellite radio system currently has twenty-three (23) contiguous frequencies across forty megahertz (40 MHz). Generally, there are seven (7) frequencies that are designated for hybrid only systems, which include satellite radios that transmit a signal from the satellite and the terrestrial repeater. Typically, the present European satellite radio system is constrained to frequency bandwidths of 1.712 MHz.

Generally, satellite systems are constrained by the available radio frequency (RF) power. The constraints of the available RF power are typically related to the limitations to the size and power dissipation of the satellites. There are several architectures or systems that are used to optimize the performance of the overall satellite system. One such system uses transmitted signals that have the same symbol rate or frequency bandwidth to achieve and increase the received signal power. In such a system, half the information is transmitted over one signal and the other half of the information is transmitted over another signal, and the two signals are received and combined by the receiver. These systems generally function properly when the signals are transmitted over an even number of frequency slots because half of the power of the source data is on one predetermined number of frequency slots and the other half of the power of the source data is on another equal number of frequency slots. Additionally, by transmitting half of the power of the source data at a time allows for the source data to be transmitted in a time diversity format. Thus, these systems typically have not been designed for an odd number of frequency slots.

Therefore, it is desirable to develop a communications system where multiple signals can be transmitted in order to achieve and increase the received signal power using an odd number of frequency slots.

### Summary of the Invention

According to one aspect of the present invention, a communications system includes at least one satellite, at least one transmitter in communication with the at least one satellite, and at least one receiver in communication with the at least one satellite. The transmitter modulates source data into at least a first modulated signal using a first modulation and a second modulated signal using a second modulation. The transmitter transmits the first and second modulated signals over an odd number of frequency slots to the at least one satellite. The receiver receives the first and second modulated signals and demodulates at least one of the first and second modulated signals.

According to another aspect of the present invention, a method of transmitting data using different modulations includes the steps of obtaining source data and modulating the source data into at least a first modulated signal using a first modulation and a second modulated signal using a second modulation by a transmitter. The method also includes the steps of transmitting the first and second modulated signals from the transmitter to at least one satellite over an odd number of frequency slots, transmitting the first and second modulated signals from the satellite, receiving the first and second modulated signals by the receiver, and demodulating at least one of the first and second modulated signals by the receiver.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is a block diagram of a communications system in accordance with one embodiment of the present invention;
Fig. 2 is a block diagram of a communications system in accordance with another embodiment of the present invention;
Fig. 3 is a flow chart illustrating a method for transmitting data in a communications system in accordance with one embodiment of the present invention; and
Fig. 4 is a flow chart illustrating a method for transmitting data in a communications system in accordance with another embodiment of the present invention.

### Description of the Preferred Embodiments

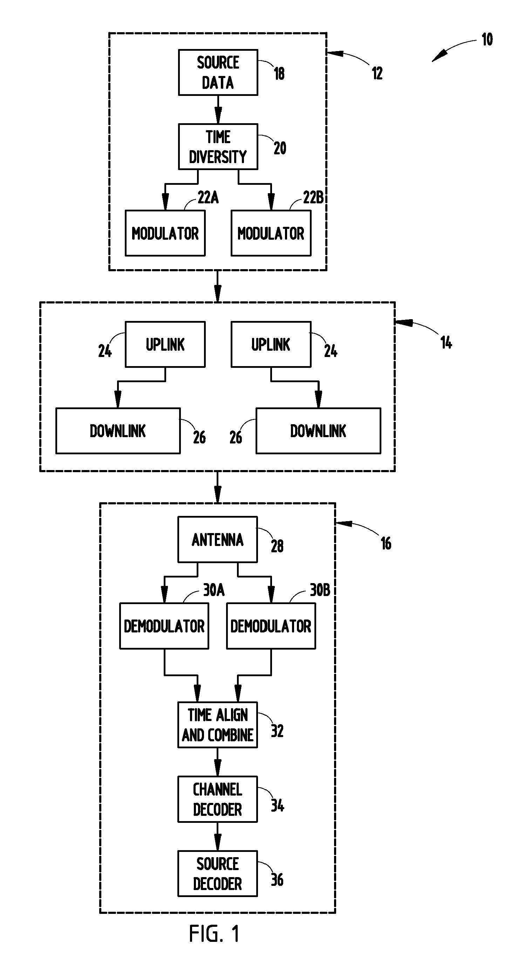

In reference to Fig. 1, a communications system is generally shown at reference indicator 10. The communications system 10 generally includes at least one transmitter generally indicated at reference indicator 12, at least one satellite generally indicated at reference indicator 14, and at least one receiver generally indicated at reference indicator 16. The satellite(s) 14 is located in space elevated from the earth, and the receiver(s) 16 and transmitter(s) 12 are located on or near earth, according to one embodiment. The transmitter 12 is in communication with the satellite 14, and the transmitter 12 obtains and modulates source data into at least a first modulated signal and a second modulated signal. The transmitter 12 transmits the first and second modulated signals over an odd number of frequency slots to at least one satellite 14, as described in greater detail below. The receiver 16 is in communication with the satellite 14, and receives the first and second modulated signals. The receiver 16 demodulates at least one of the first and second modulated signals.

The transmitter 12 obtains source data 18 from a source provider. The transmitter 12 includes a device 20 to configure the source data 18 into a time diversity format in order for the first and second modulated signals to be transmitted in time diversity. Typically, the time diversity format includes a forward error correction (FEC) system of error control. Generally, signals transmitted in a time diversity format have redundant data added to the transmitted signals in order for the receiver 16 to receive the redundant data so that the receiver 16 can detect and correct errors. Thus, if the receiver 16 detects an error, the receiver 16 can correct the error without having to transmit back to the transmitter 12, which results in efficient use of the bandwidth.

The first and second modulated signals can also be transmitted in a spatial diversity format or in time and spatial diversity format. Generally, signals transmitted in a spatial diversity format are transmitted along multiple signal paths, by multiple satellites or a single satellite and a terrestrial transponder or terrestrial repeater. Depending upon the orbital path of the satellites 14, one signal can be transmitted at a high-elevation angle with respect to the receiver 16, and a second signal may be transmitted at a low-elevation angle with respect to the receiver 16 by another satellite at a low-elevation angle or a terrestrial repeater. Thus, the probability of the receiver 16 receiving at least one of the high-elevation signal and/or the low-elevation signal is greater than if only one of the low-elevation signal and the high-elevation signal is transmitted.

The transmitter 12 modulates the source data 18 that has been formatted by the time diversity device 20 into a first modulated signal and a second modulated signal. A first modulator 22A modulates the first signal, and a second modulator 22B modulates the second signal. According to one embodiment, the first signal can be modulated into a QPSK format or modulation and the second signal can be modulated into an 8-PSK format or modulation, as described in greater detail below. However, it should be appreciated by those skilled in the art that other suitable modulations can be used for modulating the signals according to other embodiments.

In one embodiment, the satellite 14 receives the first and second modulated signals that are transmitted by the transmitter 12, such that the first and second modulated signals are uplinked to the satellite 14 by an uplink device 24. The satellite 14 then transmits the first and second modulated signals to the receiver 16, such that the first and second modulated signals are downlinked from the satellite 14 by a downlink device 26. Thus, a single satellite path is used since both the first and second modulated signals are transmitted from the transmitter 12 to a single satellite 14 and received by the receiver 16.

The receiver 16 receives the first and second modulated signals from the satellite 14 by an antenna 28. The receiver 16 includes a first demodulator 30A and a second demodulator 30B. The first and second signals are then time aligned and combined by the device 32 to detect and correct any errors, and produce a single output from the first and second modulated signals that were transmitted in the time diversity and/or spatial diversity format. The first and second signals are decoded by a channel decoder 34 and a source decoder 36.

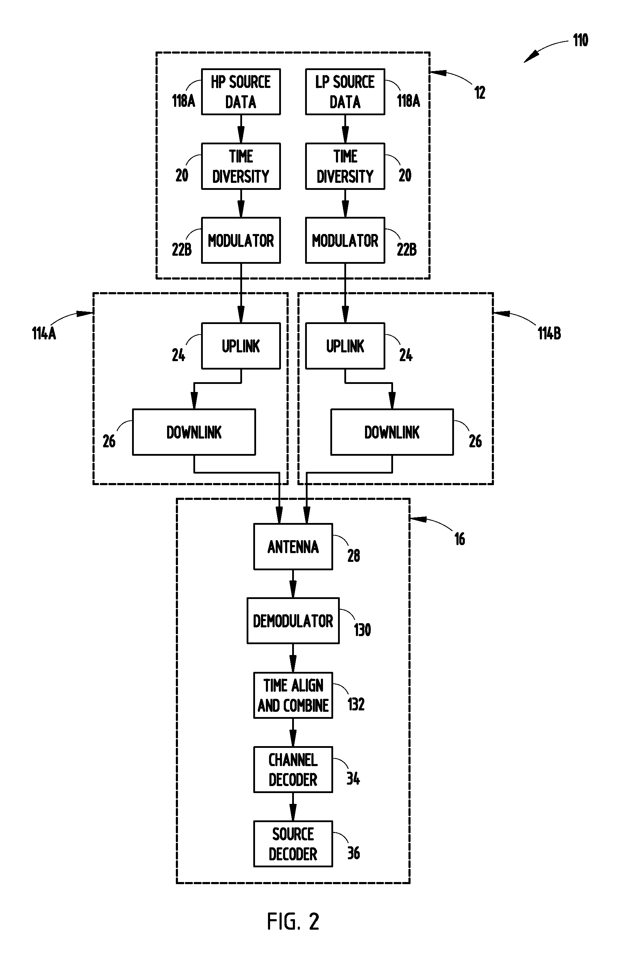

In reference to Fig. 2, an alternate embodiment of the communications system is generally shown at reference indicator 110. The communications system 110 includes the transmitter 12, satellite 14, and receiver 16. The transmitter 12 obtains high priority source data 118A and low priority source data 118B from the source provider. Both the high priority source data 118A and the low priority source data 118B can be transmitted in the time diversity and/or spatial diversity format. The first modulator 22A modulates the high priority source data 118A into the first modulated signal. The second modulator 22B modulates the low priority source data 118B into the second modulated signal. According to one embodiment, the first modulator 22A modulates the high priority source data using a QPSK modulation, and the second modulator 22B modulates the low priority data using an 8-PSK modulation. However, it should be appreciated by those skilled in the art that other suitable modulations can be used according to other embodiments.

By way of explanation and not limitation, the high priority source data 118A has a greater probability of reception than the low priority source data 118B due to the smaller probability of the signal from the high-elevation satellite being blocked than the signal from the low-elevation satellite. Additionally, the high priority source data 118A can have a different link margin than the low priority source data 118B. The link margin of the high priority source data 118A and low priority source data 118B is the amount of power received by the receiver 16 compared to the minimum power of the high priority source data 118A and low priority source data 118B in order for the receiver 16 to receive the data 118A,118B. Thus, the high priority source data 118A can be transmitted with a greater power than the low priority source data 118B.

The first modulated signal is transmitted by the transmitter 12 and uplinked by the uplink device 24 to a first satellite 114A. Likewise, the second modulated signal is transmitted by the transmitter 12 and uplinked by the uplink device 24 to a second satellite 114B. Thus, the first satellite 114A is a high elevation satellite, and the second satellite 114B is a low elevation satellite, and multiple satellite paths are used. The first and second modulated signals are transmitted from the first and second satellites 114A,114B, such that the first and second modulated signals are downlinked by the downlink devices 26 from the first and second satellites 114A,114B.

The receiver 16 receives the first and second modulated signals by the antenna 28. Typically, the receiver 16 selects either the first or second modulated signal to be demodulated by a demodulator 130. The selected signal is then time aligned by a time align and combine device 132, decoded by the channel decoder 34, and decoded by the source decoder 36.

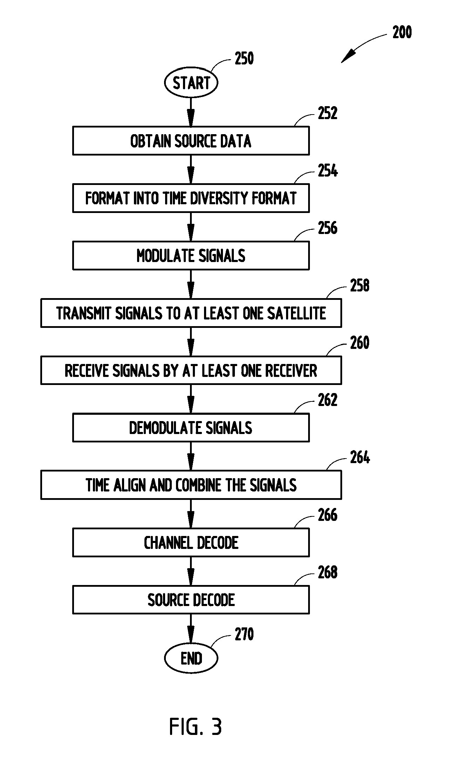

In reference to both Figs. 1 and 3, a method of transmitting data using different modulations according to one embodiment is generally shown in Fig. 3 at reference indicator 200. The method 200 starts at step 250, and proceeds to step 252, where source data is obtained. The source data is then formatted into the time diversity format by the time diversity device 20, at step 254. The method 200 modulates the signals at step 256. The transmitter 12 transmits the signals along a single satellite path to the at least one satellite 14, at step 258. The signals are received by the receiver 16 from the satellite 14, at step 260.

The receiver 16 demodulates the received first and second signals at step 262. The receiver 16 then time aligns and combines the first and second signals at step 264. The signals must be time aligned due to being formatted in the time diversity format and the signals must be combined from being transmitted separately in the time diversity format and/or spatial diversity format. The receiver 16 then channel decodes the first and second signals at step 266, and source decodes the first and second signals at step 268. The method 200 ends at step 270.

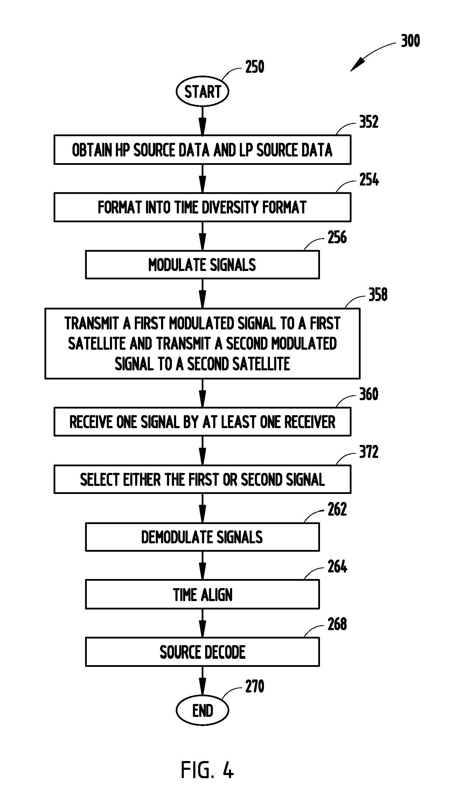

In reference to both Figs. 2 and 4, a method of transmitting data using different modulations according to another embodiment is generally shown in Fig. 4 at reference indicator 300, wherein like reference numerals represent like elements and/or steps. The method 300 includes the steps of formatting the source data into a time diversity format by the time diversity device 20, at step 254, modulating signals at step 256, demodulating signals at step 262, time aligning the signals at step 264, channel decoding the signals at step 266, and source decoding the signals at step 268, as described in method 200. The method 300 starts at step 250, and proceeds to step 352, where the transmitter 12 obtains high priority source data 118A and low priority source data 118B. The high priority source data 118A and low priority source data 118B are formatted into time diversity format by the time diversity device 20, at step 254, and modulated at step 256. The transmitter 12 then transmits a first modulated signal to a first satellite 114A, and transmits a second modulated signal to a second satellite 114B, such that two satellite signal paths are used, at step 358.

The receiver 16 receives at least one of the first and second modulated signals from the first and second satellites 114A,114B, at step 360. If the receiver 16 receives both the first and second modulated signals, then the receiver 16 selects either the first or second modulated signal at step 372. Thus, both the first and second modulated signals can be processed or selected by the receiver 16, but the first and second modulated signals will not be combined when the source data of the first modulated signal differs from the source data of the second modulated signal, such as when the high priority source data 118A that differs from the low priority source data 118B is being transmitted. The receiver 16 then demodulates the signal at step 262, time aligns the signal at step 264, channel decodes the signal at step 266, and source decodes the signal at step 268. The method 300 ends at step 270.

By way of explanation and not limitation, the communications system 10,110 and method 200,300 shown in Figs. 1-4 can be used to transmit signals over an odd number of frequency slots. A different modulation is used for the different signals, such as QPSK and 8-PSK modulations. QPSK modulations have two bits per frequency slot, and 8-PSK modulations have three bits per frequency slot. Thus, if half of the information is transmitted over four frequency slots, and the signal is modulated in the QPSK modulation, then eight bits of data are being transmitted over the four frequency slots. Also, if the other half of the information is transmitted over three frequency slots in the 8-PSK modulation, then nine bits of data are being transmitted over the three frequency slots. The receiver 16 can then demodulate and combine the QPSK and the 8-PSK modulated signals when the source data of the QPSK modulated signal is the same as the source data of the 8-PSK modulated signal. However, if the source data of the QPSK modulated signal differs from the source data of the 8-PSK modulated signal, then the signals are not combined by the receiver 16. Typically, the FEC rate must be altered for transmitting signals that are modulated differently from one another. In this example, the FEC rate for the 8-PSK modulated signal is 8/9 the FEC rate of the QPSK modulated signal. This allows each signal to transmit a similar energy bit per noise power (Eb/No) for one-half of the usable data bits.

Another example of data transmission with the communication system 10,110 and method 200,300 is where the first signal is modulated in the 8-PSK modulation and transmitted over four frequency slots, such that twelve bits of data are being transmitted over four frequency slots. The second signal can also be modulated using the 8-PSK modulation and transmitted over three frequency slots, such that nine bits of data are being transmitted over three frequency slots. The FEC rate of the second modulated signal is then 4/3 the FEC rate of the first modulated signal in order to maintain the similar Eb/No for all usable data bits.

It should be appreciated by those skilled in the art that any number of satellites, satellite signal paths, and/or terrestrial repeaters can be used in order to transmit the signals from the transmitter 12 to the receiver 16. For example purposes only, and in no way limiting, the QPSK modulated signals can be transmitted to the first satellite 114A along a first satellite path and the 8-PSK modulated signals can be transmitted to the second satellite 114B along a second satellite path. Alternatively, a single satellite 14 can be used where both the QPSK modulated signals and the 8-PSK modulated signals are transmitted to the satellite 14 along a single satellite path.

When multiple satellites 114A,114B are used, one satellite can be a high elevation satellite 114A and the second satellite can be a low elevation satellite 114B so that the signals are transmitted in a spatial diversity format. By way of explanation and not limitation, if the satellites are highly elliptical orbit (HEO) satellites, then at some point during the orbital path, the satellites 114A,114B change from being the high elevation satellite to the low elevation satellite with respect to the receiver 16. Typically, high priority source data 118A is modulated using the QPSK modulation and transmitted to the high elevation satellite 114A, and low priority source data 118B is modulated using the 8-PSK modulation and transmitted to the low elevation satellite 114B.

An example of high priority source data 118A is time sensitive data, such as streaming music being broadcast by the source provider. Thus, if the high priority source data 118A is not received, then the receiver 16 cannot produce the desired output, such as the output contains a mute or dropout. An example of low priority source data 118B is less time sensitive data that does not need to be broadcast immediately, such as, but not limited to, reports about the weather or traffic. Thus, the low priority source data 118B can be transmitted in a carousel format, such that the data is repeatedly transmitted, and the low priority source data 118B can be received by the receiver 16 during a repeated transmission. By way of example, the low priority source data 118B is still relevant ten minutes after transmission, whereas high priority source data 118A, such as streaming music, is not recoverable if the receiver 16 does not receive the data as it is being broadcast by the source provider. Therefore, the high priority source data 118A is transmitted with a greater probability of reception to prevent the receiver 16 from emitting an undesirable output.

The receiver 16 can be either a mobile device mounted in a vehicle, a mobile handheld device, or a stationary device. Typically, mobile devices and stationary devices can have increased received signal power when the data is transmitted from multiple sources, such as satellites 114A,114B. Further, transmitting the data in the time diversity format, spatial diversity format, or a combination thereof increases the probability of reception by the receiver 16.

Advantageously, source data can be broadcast or transmitted by the source provider using an odd number of frequency slots. By modulating the source data using different modulations, the source data can be transmitted in both a time diversity and spatial diversity format, and maintain a similar energy bit per noise power for the usable data bits. The data can be transmitted using different signal modulations by altering the time diversity or FEC rate. Thus, the source provider efficiently uses the frequency band. Further, the received signal power increases by transmitting the signal from multiple sources when compared to systems that transmit the data from a single source.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A communications system (10) comprising:
at least one satellite (14);
at least one transmitter (12) in communication with said at least one satellite (14), wherein said at least one transmitter (12) modulates source data (18) into at least a first modulated signal using a first modulation and a second modulated signal using a second modulation, and transmits said first and second modulated signals over an odd number of frequency slots to said at least one satellite (14); and
at least one receiver (16) in communication with said at least one satellite (14), wherein said at least one receiver (16) receives said first and second modulated signals and demodulates at least one of said first and second modulated signals.

2. The communications system (10) of claim 1, wherein said transmitter (12) transmits said first and second modulated signals in at least one of a time diversity format and a spatial diversity format.

3. The communications system (10) of claim 2, wherein said receiver (16) time aligns and combines said first and second modulated signals.

4. The communications system (10) of claim 1, wherein said transmitter (12) transmits said first modulated signal to a first satellite (114A) of said at least one satellite (14) and said second modulated signal to a second satellite (114B) of said at least one satellite (14).

5. The communications system (10) of claim 1, wherein said first modulated signal is modulated in a QPSK modulation and said second modulated signal is modulated in an 8-PSK modulation.

6. The communications system (10) of claim 1, wherein said first modulated signal is a high priority source data (118A) signal, and said second modulated signal is a low priority source data (118B) signal.

7. The communications system (10) of claim 6, wherein said receiver (16) selects one of said first modulated signal and said second modulated signal, and demodulates said selected signal.

8. The communications system (10) of claim 1, wherein said receiver (16) decodes at least one of said first modulated signal and said second modulated signal.

9. The communications system (10) of claim 1, wherein said receiver (16) is a mobile receiver (16) mounted in a vehicle.

10. A method (200,300) of transmitting data using different modulations, said method comprising the steps of:
obtaining (252,352) source data (18);
modulating said source data (18) into at least a first modulated signal using a first modulation and a second modulated signal using a second modulation (256);
transmitting said first and second modulated signals (258) from said transmitter (12) to at least one satellite (14) over an odd number of frequency slots;
transmitting said first and second modulated signals (358) from said at least one satellite (14);
receiving said first and second modulated signals (260,360) by at least one receiver (16); and
demodulating at least one of said first and second modulated signals (262) by said at least one receiver (16).

11. The method (200,300) of claim 10 further comprising the step of transmitting said first and second modulated signals in at least one of a time diversity format (254) and a spatial diversity format.

12. The method (200,300) of claim 11 further comprising the step of time aligning and combining (264) said first and second modulated signals by said receiver (16).

13. The method (200,300) of claim 10, wherein said transmitter (12) transmits (358) said first modulated signal to a first satellite (114A) of said at least one satellite (14) and said second modulated signal to a second satellite (114B) of said at least one satellite (14).

14. The method (200,300) of claim 10, wherein said first modulated signal is a QPSK modulation and said second modulated signal is an 8-PSK modulation.

15. The method (200,300) of claim 10, wherein said first modulated signal is a high priority source data signal (118A), and said second modulated signal is a low priority source data signal (118B), and said receiver (16) selects one of said first modulated signal and said second modulated signal and demodulates (262) said selected signal.

16. The method (200,300) of claim 10 further comprising the step of decoding (268) at least one of said first and second modulated signals by said receiver (16).
